# EUROPEAN PATENT SPECIFICATION

(11) **EP 2 234 514 B1**
(45) Date of publication and mention of the grant of the patent: **24.10.2012**
(21) Application number: 08720212.3
(22) Date of filing: 28.01.2008
(51) Int. Cl.: A43B 13/12, A43B 13/18, B29D 35/14, B29C 44/12, B29C 44/58, B29C 44/08, B29C 33/00, B29L 31/50

(54) **METHOD FOR MANUFACTURING SHOE SOLES WITH COMPOSITE STRUCTURE AND SUCH SHOE SOLES**
VERFAHREN ZUR HERSTELLUNG VON SCHUHSOHLEN MIT VERBUNDSTRUKTUR UND DERARTIGE SCHUHSOHLEN
PROCÉDÉ POUR FABRIQUER DES SEMELLES DE CHAUSSURE AYANT UNE STRUCTURE COMPOSITE ET SEMELLES DE CHAUSSURE

(43) Date of publication of application: 06.10.2010
(73) Proprietor: Soles.com S.r.l., 62016 Porto Potenza Picena (MC) (IT)
(72) Inventor: SAGRIPANTI, Marino, I-62017 Porto Recanati (MC) (IT)
(74) Representative: Baldi, Claudio
(86) International application number: PCT/IT2008/000042
(87) International publication number: WO 2009/095935

(56) References cited:
- EP-A- 0 974 281
- DE-A1- 4 200 730
- FR-A- 2 248 127
- JP-A- 2 252 402
- US-A- 6 041 520
- US-A1- 2005 273 948

## Description

The present patent application refers to a method for manufacturing shoe soles with composite structure, together with the shoe soles obtained with the said method.

The advantages and peculiarities of the invention will become evident after a short description of the prior technique.

Shoes with light, wear-resistant, flexible and comfortable soles have been demanded for long.

In the last few years such a demand has also increased in the high-end shoe sector.

Currently, shoe soles are produced according to different technologies, using different materials.

The most popular shoe soles are made of TPR (thermoplastic rubber), TPU (thermoplastic polyurethane), PVC (polyvinyl chloride) and ABS, and are obtained by means of injection or moulding, using suitable moulds.

A similar technology gives excellent results for soles with limited thickness and weight.

Flexible soft compounds can be used when moulding soles with low thickness, since the requirements for bearing capacity and resistance to compression are minimal.

On the contrary, in case of shoe soles with high thickness both in the heel and sole (such as in the case of the so-called "platform shoes"), no satisfactory results can be obtained with the aforementioned moulding materials.

A first inconvenience is related to the fact that the said materials have a density of approximately 1 Kg/I; it is evident that the considerable volume given to the sole will consequently increase the weight of the sole itself.

Some lightening operations can be carried out in such a high-thickness structure, although originating large cavities inside the sole that require the presence of suitable stiffening ribs.

Moreover, the lateral walls of a similar sole must be provided with high thickness, in order to provide the sole with a satisfactory level of bearing capacity and create a suitable gluing surface for the upper.

The need to provide such a high thickness, at least in the lateral sides of the sole, requires longer moulding time due to necessary cooling or longer rubber vulcanisation time.

Additionally, the aforementioned materials - except for ABS, which is an intrinsically rigid material - must be formulated with very rigid characteristics, due to considerable lightening of the entire surface of the sole; this requires the use of an especially rigid mounting sole (the so-called "intersole") to prevent the user's foot from being disturbed by the presence of the stiffening ribs.

Finally, it can be said that especially rigid moulding materials and high-thickness rigid mounting intersoles must be used to produce shoe soles with the current technologies, thus obtaining an especially rigid and heavy final product, characterised by low comfort.

Expanded polyurethane is used according to another traditional manufacturing technology of shoe soles, by means of casting or injection technique.

Being light and flexible, this material is largely used to imitate leather and wood, especially in summer shoes.

However, expanded polyurethane is not appropriate to produce closed shoes, being a slippery material that is not able to imitate natural rubber (such as in the case of TPR or TPU).

Moreover, products must be washed and painted in order to obtain aesthetically satisfactory results, although integral colouring is especially arduous and causes material waste; additionally, this operation is an extremely complicated and polluting process.

A third existing technology that is especially appreciated for production of high-volume light soles consists in moulding sole formats with light expanded materials and covering them with natural rubber plates (the so-called "crep").

This technology is scarcely compatible with the current industrial requirements, since it involves a large use of labour, it requires the use of dangerous glues in terms of workers' safety and, in general, it has very high production costs.

EP 0 974 281 discloses a footwear construction having a sole with an outsole shell that is filled with polyurethane foam and secured to the upper by welt. Said document discloses also the steps defined in the preamble of claim 1.

US 6 041 520 discloses a safety shoe provided with a two-layer structure sole including an outsole part comprising hardness rubber material and a midsole part laminated in the above outsole part, comprising a low hardness sponge rubber material.

The process of the invention has been developed to overcome the aforementioned inconveniences, in order to obtain especially light, resistant and insulating shoe soles provided with a special composite structure.

The soles of the invention are externally provided with a shell obtained from noble moulding materials (such as vulcanised rubber, thermoplastic rubber, thermoplastic polyurethane, PVC, ABS, etc.) that are especially resistant to abrasion, wear, shocks or scratches; it being provided that the said shell is provided with a suitable structure that allows for practical and safe gluing of the upper.

The internal part of the soles obtained according to the method of the invention is composed of a filling insert made of expanded materials that is alternatively obtained by means of casting or injection.

During the realisation of the said filling insert, the insert can be discretionally given higher rigidity in the heel and lower rigidity and higher elasticity in the front half-sole, with high thermal insulation due to the expanded materials that form the majority of the volume of the shoe sole obtained according to the present invention.

More precisely, the new technology of the invention intends to achieve the following purposes:
- produce a light flexible sole, also in case of high thickness, in order to couple it with a soft comfortable mounting intersole, without any risk of deformation caused by the user's weight and without fearing that the user's foot can perceive - as it occurs with traditional soles - the disturbing presence of stiffening ribs possibly obtained inside the sole of the invention;
- achieve perfect thermal insulation from the ground of the sole of the invention by using expanded materials;
- obtain an especially soft flexible front part and a rigid stable back part (for the heel) on the sole of the invention;
- obtain extremely reliable assembly between the external shell and the filling insert, regardless of the adhesion compatibility of the materials used;
- give any desired thickness to the shell in the areas that are especially subjected to wear and shocks (such as the heel, the central area of the sole, the external lateral areas), without impairing their bearing capacity, since the bearing capacity of the entire sole is guaranteed by the presence of the internal insert.

In view of the above, the manufacturing method of the invention provides for the realisation of an aluminium mould able to mould a hollow shell having the same structure as a sole, which is made of rubber or any other suitable material and provided with suitably dimensioned areas with higher thickness in the areas that are especially subjected to wear and shocks.

Moreover, the shell incorporates an upper perimeter flange with basically horizontal direction that is used to glue the perimeter borders of the upper.

The said shell also contains one or more partitions between the heel area and the front half-sole.

The following operation of the manufacturing method of the invention provides for inserting the shell into a second mould with cover, in order to mould the filling insert made of expanded materials inside the shell.

The shape and height of the second mould are such that the shell is completely and exactly lowered inside the mould, in such a way that the perimeter flange provided on top of the shell is flush with the upper surface of the mould.

It must be noted that the second mould is made of resin, preferably using the shell as pattern; this is made possible by the lower catalysis temperature and by the insignificant shrinkage of the resin.

The cover of the resin mould is preferably provided with pins with basically vertical direction that are lowered in the cavity of the mould when the cover is placed in operative position.

The pins are designed to improve the expansion control of the moulding material.

Preferably, the pins have a higher cross-section in the heel area, where the sole must be more rigid and resistant, and a lower cross-section in the front, where the sole must be softer and more flexible.

Because of this, the user's foot that rests on the sole of the invention is not disturbed by the presence of the internal ribs, as it occurs with traditional soles.

Once the two aforementioned moulds have been arranged, the manufacturing method of the invention provides for the operations described below.

The first operation consists in moulding the shell inside the first mould; this operation is performed by using, for instance, vulcanised rubber, thermoplastic rubber, thermoplastic polyurethane.

By using a moulding machine for expanded polyurethane, the shell is inserted inside the second mould, where polyurethane material is poured to obtain the internal insert.

The filling insert may be obtained from a single material able to fill the internal cavity of the shell completely.

Alternatively, the said insert may be obtained in two or more sections, separated by suitable partitions provided inside the shell.

This allows to pour expanded materials (preferably polyurethane material) with different hardness and elasticity in the internal compartments of the shell; this can be done to provide the sole of the invention with an especially rigid heel area, which is able to bear the user's weight without deformation and with a more flexible front area, which is able to ensure higher comfort for the user's foot.

After pouring the polyurethane material inside the shell, the moulding machine closes the cover on the second mould.

In this way, because of the expansion of the polyurethane material poured inside the shell, the internal insert reaches the height of the upper perimeter flange of the shell.

Nevertheless, the flange is not covered with polyurethane material because it is flush to the internal surface of the cover of the second mould.

After a surface finish operation, following to the extraction from the mould, the sole is coupled with the upper.

More precisely, the lower horizontal surface of the upper is glued against the upper side of the sole of the invention, since the upper side is basically linear due to the perfect alignment obtained between the perimeter flange of the bearing shell and the upper surface of the filling insert made of polyurethane material.

In view of the fact that the polyurethane material used to mould the internal insert reaches the area immediately below the upper perimeter flange of the bearing shell during the expansion phase, it appears evident that the accidental uncoupling of the insert from the shell is not possible, including in the presence of precarious mutual gluing.

The accidental extraction of the insert is prevented by the interference caused by the horizontal flange of the shell on the perimeter border of the insert.

Such a characteristic of the sole of the invention is extremely advantageous because the coupling between the two different materials used to obtain the shell and the filling insert may be temporary and unstable, especially in the presence of the inevitable stress transmitted to the sole of the invention during walking.

In fact, regardless of a possible preventive treatment of two materials, such a precarious coupling may occur for a series of different reasons, such as: possible differences in storage time, possible temperature and humidity variations, possible mixture variations, presence of surface dust, etc.

In view of the above, gluing of the two components (being made of incompatible materials) may be eliminated, by simply giving higher thickness and rigidity to the perimeter flange of the shell, thus entrusting the flange with the task of preventing the accidental extraction of the internal insert.

In view of the fact that the insert obtained inside the external shell is designed to be recessed completely inside the shell, it appears evident that recycled polyurethane materials of any colour can be used to obtain the said insert, regardless of the fact that they are produce an internal insert with surface porosity and a colour that would not be acceptable in a visible section of the sole.

It must be noted that the two components of the sole of the invention can be obtained also by injection, in addition to casting.

In view of the low pressure values created inside each mould, also in this second case, resin moulds can be used instead of aluminium moulds, providing adequate internal channels for cooling liquids in both cases.

For purposes of clarity, the description of the invention continues with reference to the enclosed drawings, which are intended for purposes of illustration only and not in a limiting sense, whereby:
- figures 1, 2, 3 are longitudinal cross-sectional views of three different embodiments of the mould used to mould the bearing shell of the sole of the invention;
- figure 4 is a top view of the external shell provided in the sole of the invention, extracted from the mould;
- figure 5 is a bottom view of the same shell;
- figure 6 is a longitudinal cross-sectional view of the shell shown in the two previous figures;
- figures 7 and 8 are the same as figure 5, except in that they refer to two alternative constructive embodiments of the shell;
- figure 9 is a side view of the shell;
- figure 10 is a longitudinal cross-sectional view that shows the shell inside the mould used to mould the filling insert, with the cover in raised position;
- figure 11 is a top view of the shell inside the mould, provided with the relevant internal filling insert;
- figure 12 is a longitudinal cross-sectional view of the sole of the invention complete with the two components inside the mould used to mould the internal insert;
- figures 13 and 14 are the same as figure 12, except in that they refer to two alternative constructive embodiments of the sole;
- figures 15, 16 and 17 are longitudinal cross-sectional views of the soles shown in figures 12, 13 and 14 after being extracted from the moulds;
- figure 18 is a top view of an embodiment of the sole in which the internal insert has been obtained in two different sections, each of them being obtained with a specific moulding material;
- figure 19 is a view of an embodiment of the sole of the invention without the upper perimeter flange;
- figure 20 is a longitudinal cross-sectional view that shows the sole inside the mould provided with the filling insert obtained with two different moulding materials by means of injection moulding.

As mentioned above, the manufacturing method of the sole of the invention comprises a first process phase that consists in moulding a hollow shell (3) from especially light thermoplastic materials, such as for instance vulcanised rubber, thermoplastic rubber, thermoplastic polyurethane, PVC, ABS, etc.).

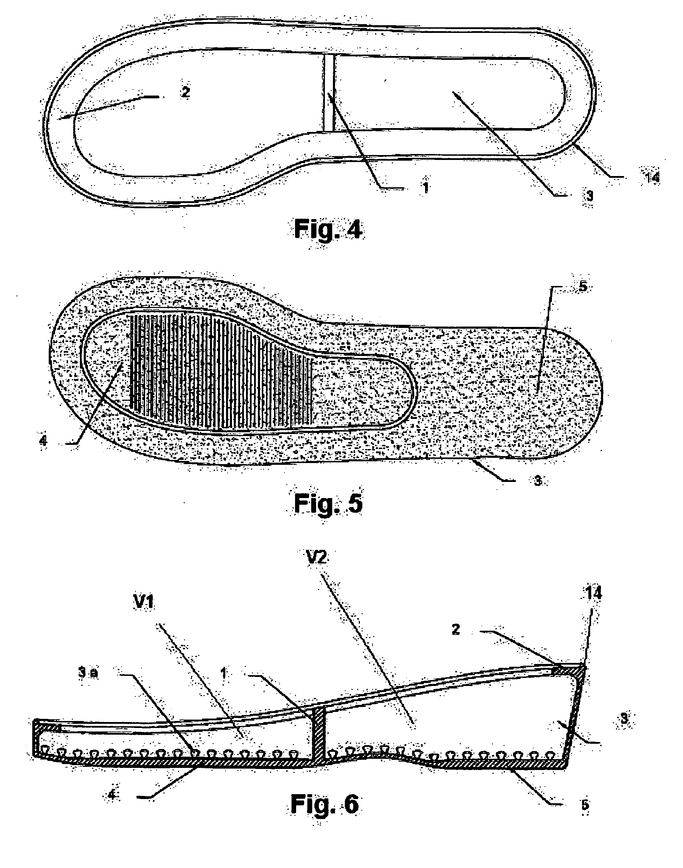

The shell (3) is designed to form the external structure - meaning the perimeter sides and the lower walking surface - of the sole of the invention, as expressly shown in figures 4, 6, 7 and 8.

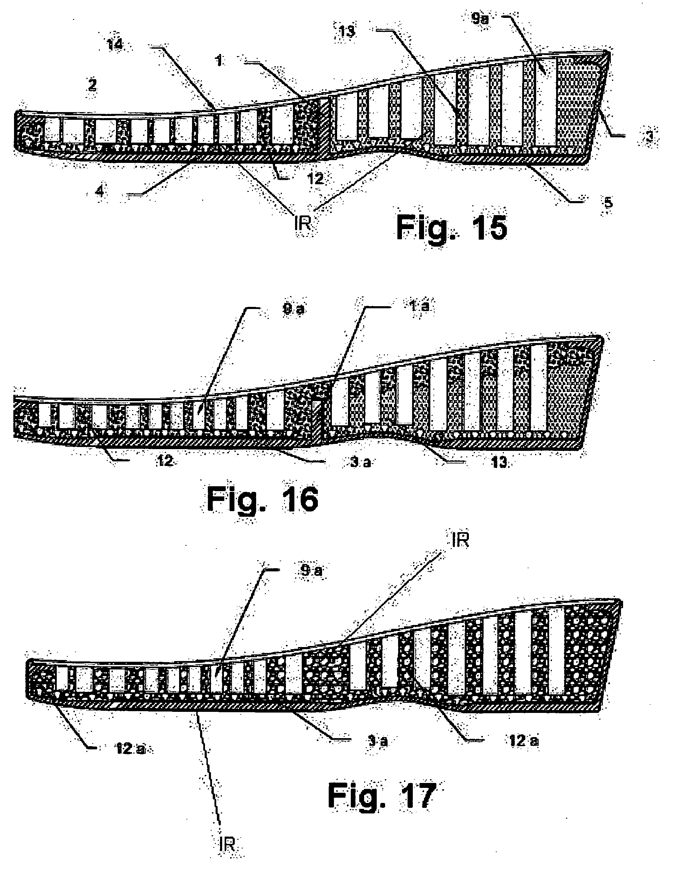

The second process phase consists in forming a filling reinforcing insert (IR) made of inexpensive polyurethane materials inside the shell (3), as shown in figures 15, 16 and 17.

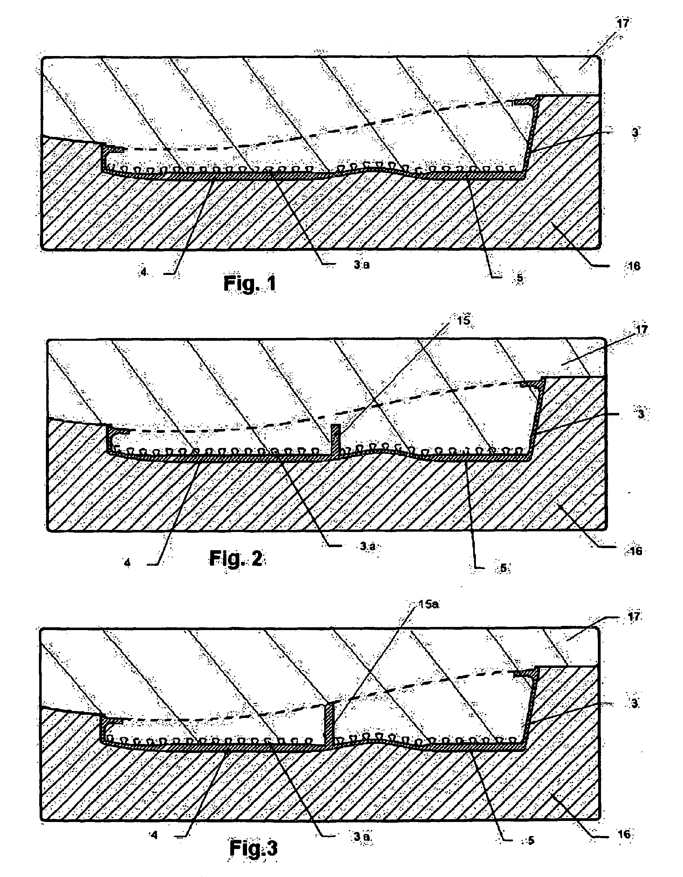

Figure 1 shows a first embodiment of the shell (3) inside the mould (17), while figures 4, 6, 7 and 8 show the same shell (3) outside of the mould (17).

In particular, as shown in figures 4 and 6, the shell (3) is internally provided with a central transversal partition (1) having basically the same height as the sides of the shell, while a perimeter flange (2) with horizontal inward direction is incorporated on top of the shell (3).

The function of the central partition (1) is to create two separate compartments (V1, V2) inside the shell (3) designed to favour the creation - as illustrated below - of two separate sections (12, 13) of the insert (IR).

The presence of the horizontal flange (2) is justified as fixing point of the perimeter edge of the upper.

It must be noted that the embodiment of the shell shown in figure 4 provides for the presence of a perimeter step (14), in external higher position with respect to the flange (2), designed to favour and accelerate the insertion of the upper; the said step (14) is preferably provided with higher thickness than the other areas of the shell (3).

As shown in figure 5, the shell (3) is provided with an anti-slip walking surface under the bottom, in which the main interference points with the ground are normally represented by the front (4) of the sole and the heel (5).

The horizontal bottom of the shell (3) is provided with two areas with higher thickness on the front (4) of the sole and the heel (5), as expressly shown in figure 6.

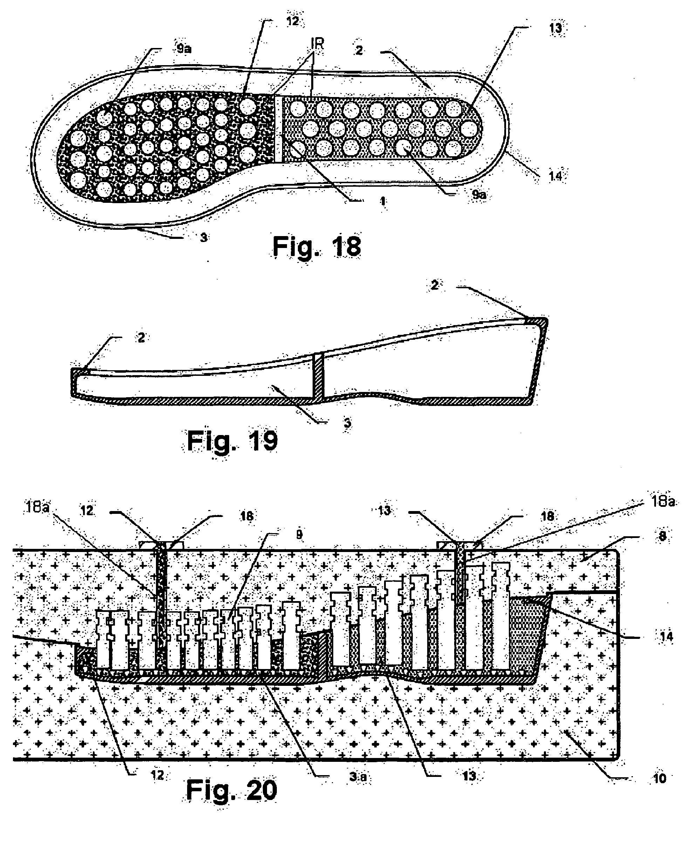

Figure 19 refers to an embodiment of the shell (3) that is not provided with the perimeter step (14); the sole provided with this particular embodiment of the shell acquires a semblance that recalls hand-made products.

As shown in figure 6, the bottom of the shell (3) is internally provided with a series of mushroom protuberances (3a) designed to favour the anchoring of the moulding material that is successively lowered inside the shell to obtain the filling reinforcing insert (IR).

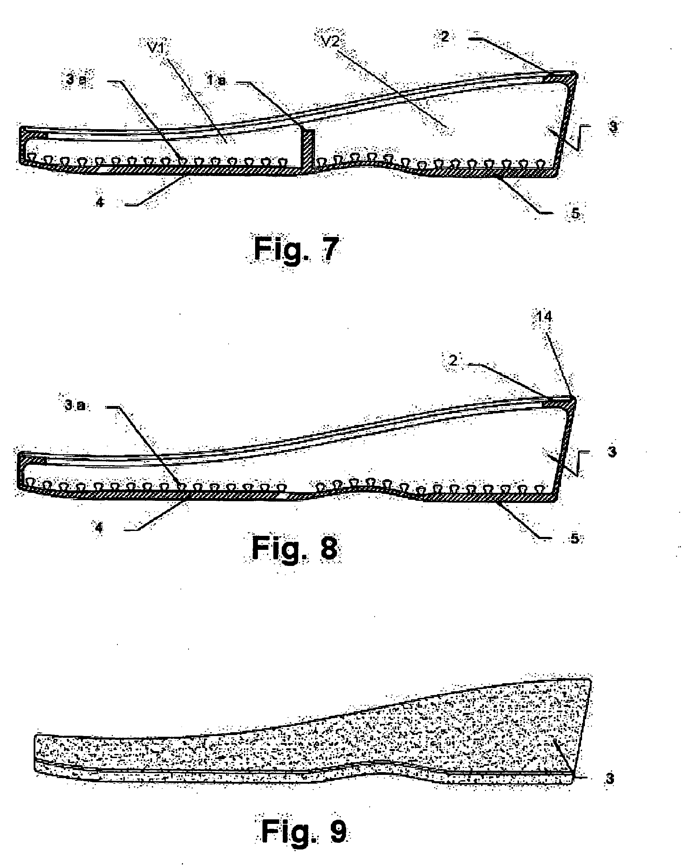

Figures 7 and 8 refer to two alternative embodiments of the shell (3), the first one being characterised in that it is provided with a central transversal partition (1 a) with lower height than the sides of the shell, and the second one being characterised in that it is not provided with the said central partition.

The presence of the central partition with lower height (1a) allows the two sections (12, 13) of the filling insert (IR) that are obtained by moulding polyurethane materials inside the two compartments (V1, V2) of the shell (3) to permeate towards the top.

On the contrary, the absence of the said partition allows to provide the filling insert (IR) with uninterrupted monolithic structure.

The embodiment of the shell (3) shown in figure 7 is obtained by using the specific version of the mould shown in figure 2, which is suitably provided with a transversal groove (15) with lower depth than the height of the sides of the shell (3) under the cover (16).

Instead, the embodiment of the shell (3) shown in figure 6 is obtained by using the specific version of the mould shown in figure 3, which is suitably provided with a transversal groove (15a) with depth identical to the height of the sides of the shell (3) under the cover (16).

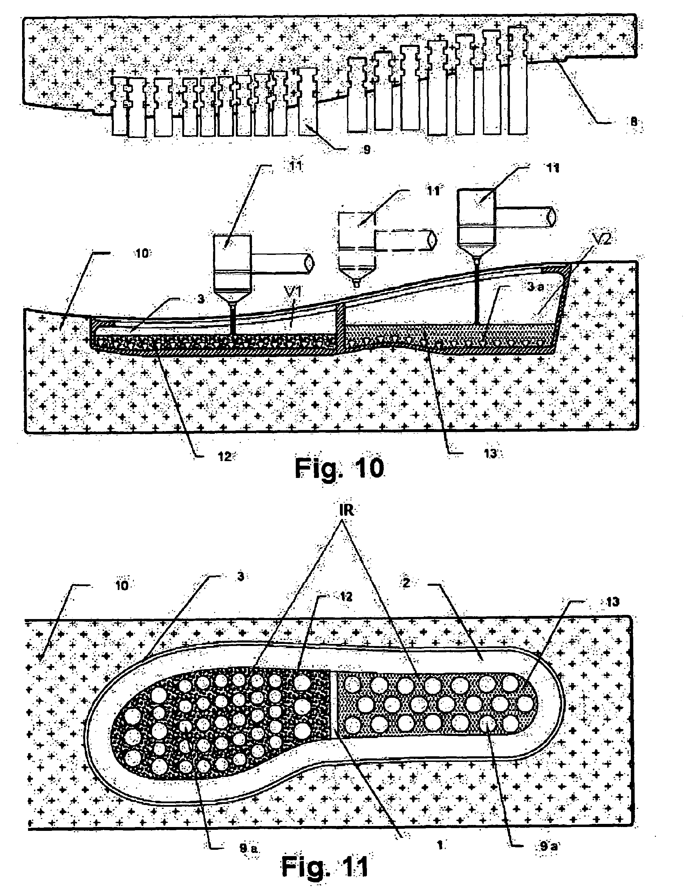

With reference to figure 10, the second process phase of the manufacturing method of the invention provides for the exact insertion of the shell (3) inside the corresponding cavity of a second mould (10); as shown in the said figure, the position of the shell (3) is such that the perimeter flange (2) is basically flush with the upper surface of the mould (10).

Once the shell (3) has been placed in this position, the internal compartments (V1, V2) are filled with expanded materials fed by corresponding teeming devices (11).

This operation is designed to form two different sections (12, 13) of the filling insert (IR), downstream and upstream the central transversal partition (1) of the shell (3).

During this operation the cover (8) of the mould (10) is maintained in open position and is closed as soon as the shell (3) is filled completely.

The internal walls of the shell (3) may be treated with a film of adhering materials (of known type) to favour the mutual stable adhesion between the shell (3) and the filling insert (IR).

As shown in figure 10, the protuberances (3a) perform an anchoring function with respect to the expanded materials used for filling, when the said materials in fluid state are partially accumulated also under the enlarged heads of the protuberances (3a).

Once the materials have consolidated, the sections (12, 13) obtained with them are no longer in a position to be uncoupled from the protuberances (3), also in the presence of energetic upward traction.

The risk of uncoupling and accidental extraction of the insert (IR) from the shell (3) is additionally prevented by the fact that - as it was noted earlier - once they have consolidated, the moulding materials used to obtain the two sections (12, 13) are also accumulated under the perimeter flange (2) of the shell (3).

The cover (8) of the second mould (10) is provided in lower position with two groups of pins with vertical axis (9) designed to be inserted deeply in the internal cavity of the shell (3) when the cover (8) is closed.

As mentioned above, their function is to originate corresponding series of lightening holes (9a) in the expanded materials in fluid state used to form the sections (12, 13) of the filling insert (IR).

As shown in figure 11, the pins (9) and consequently the lightening holes (9a) originated by them can have different cross-sections.

In particular, holes (9a) with lower cross-section may be obtained in the front of the sole of the invention, because the user's weight is discharged in this area during walking and also because this area of the sole is characterised by lower height and higher flexibility.

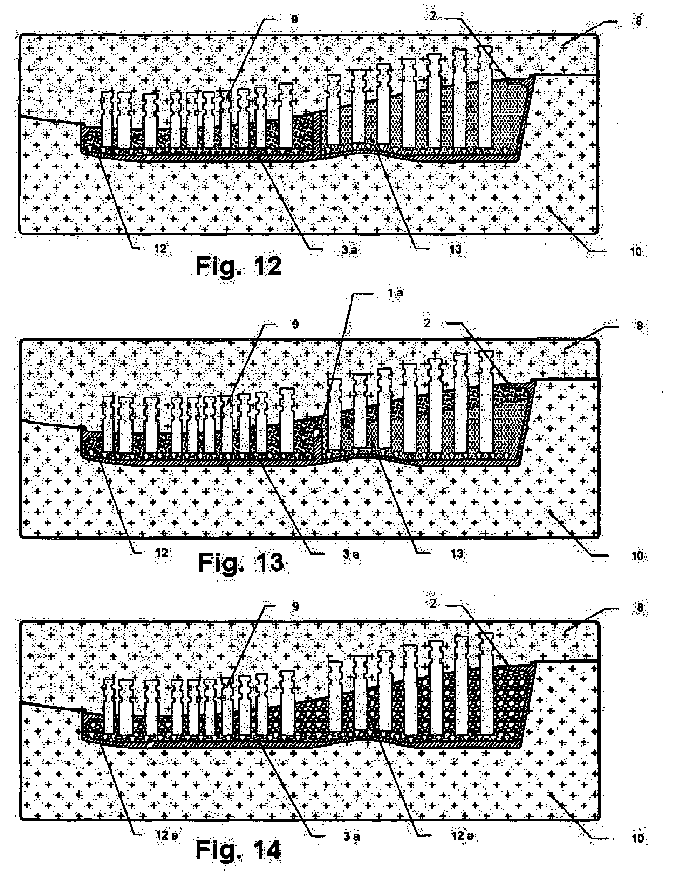

Figure 12, which shows the position of the mould (10) when the cover (8) is closed, also illustrates another important fact; reference is made to the fact that the internal side of the cover (8) is arranged basically flush to the upper surface of the perimeter flange (2) of the shell (3).

This fact ensures that the height of the expanded material used to form the filling insert (IR) does not exceed the height of the flange (2) in order to avoid undesired gaps between them.

Figures 13 and 14 are identical to figure 12, except for they refer to two alternative embodiments of the shoe sole of the invention, meaning respectively the embodiment in which the shell (3) is provided with central transversal partition (1 a) with reduced height and the embodiment in which the said shell (3) is not provided with the said central partition.

Figures 15, 16 and 17 show the three different embodiments of the shoe sole of the invention extracted from the relevant moulds shown in figures 12, 13 and 14.

As shown in figure 15, because of the presence of the central transversal partition (1) inside the shell (3) the filling insert (IR) is formed of the two different sections (12, 13), each of them being obtained with a different expanded material.

The same embodiment of the shoe sole of the invention is also shown with a top view in figure 18.

As shown in figure 16, the presence of a central transversal partition (1 a) with reduced height inside the shell (3) allows the permeation of the two different expanded materials poured inside the compartments (V1, V2) of the shell.

According to the embodiment shown in the said figure, the expanded material of the front section (12) of the filling insert (IR) passes through the small passage section above the transversal section (1a) and is poured over the back section (13) of the same filling insert (IR).

Finally, figure 17 shows the embodiment of the shoe sole of the invention provided with a filling insert (IR) with monolithic structure because of the elimination of the central transversal partition.

Figure 20 shows the mould (10) used to obtain the filling insert (IR) of the shell (3) by means of injection, that is to say with the mould closed.

In this case the cover (8) of the mould (10) is provided on top with two injection holes (18) for the two different moulding materials that are poured in the compartments (V1, V2) of the shell (3) through two appropriate rectilinear ducts (18a) with vertical direction.

## Claims

1. Method for manufacturing shoe soles with composite structure comprising the following process phases:
a) moulding inside a mould (16) with cover (17) of a light flexible shell (3) made of rubber or other thermoplastic materials, designed to form the external structure, meaning the perimeter sides and the lower walking surface of a shoe sole;
b) exact insertion of the said shell (3) inside a second mould (10) in order to form a suitable filling insert (IR) obtained by moulding expanded materials inside the shell (3);
wherein the process phase a) provides for moulding of a horizontal flange (2) with inward direction on the upper perimeter border of the shell (3), **characterised in that**
the process phase b) provides for arranging the internal side of the cover of the second mould (10) basically flush to the upper surface of the perimeter flange (2) of the shell, so that the height of the expanded material used to form the filling insert (IR) does not exceed the height of the flange (2), so that said horizontal flange (2) can be the fixing point of the perimeter edge of the upper.

2. Manufacturing method as claimed in claim 1, **characterised in that** during process phase b) the perimeter border of the upper surface of the filling insert (IR) of the shell (3) touches the lower side of the perimeter flange (2) of the shell, while the remaining upper surface of the insert (IR) is flush with the flange (2).

3. Manufacturing method as claimed in claims 1 or 2, **characterised in that** process phase a) provides for moulding a small step (14) in external position on the perimeter flange (2).

4. Manufacturing method as claimed in anyone of the claims 1 to 3, **characterised in that** process phase a) provides for moulding a plurality of mushroom protuberances (3a) on the internal side of the horizontal wall of the shell (3).

5. Manufacturing method as claimed in anyone of the claims 1 to 4, **characterised in that** process phase a) provides for moulding one or more transversal partitions (1, 1 a) with vertical direction designed to originate two or more different compartments (V1, V2) inside the shell (3) and process phase b) provides for moulding the filling insert (IR) of the shell (3) as two different sections (12, 13), upstream and downstream the central partition (1) of the shell, obtained from different moulding materials with different flexibility features.

6. Manufacturing method as claimed in claim 1, **characterised in that** process phase b) is carried out after applying on the internal walls of the shell (3) a film of known substances designed to favour the mutual stable coupling with the filling insert (IR).

7. Manufacturing method as claimed in one or more of claims 1 to 6, **characterised in that** the mould (10) used to mould the filling insert (IR) is made of resin and said resin mould (10) used to mould the filling insert (IR) is obtained by using the shell (3) designed to be inserted inside it as pattern.

## Patentansprüche

1. Verfahren zur Herstellung einer Verbundstruktursohle, umfassend folgende operative Phasen:
a) Formen im Innern einer Form (16), die mit einem entsprechenden Deckel (17), einer leichten und flexiblen Schale (3) aus Gummi oder anderen thermoplastischen Materialien versehen und dazu bestimmt ist, die Außenstruktur im Sinne von umlaufenden Seitenprofilen und einer unteren Trittfläche einer Schuhsohle zu bilden;
b) exaktes Einsetzen der Schale (3) in eine zweite Form (10) zum Zwecke des Formens, im Innern der Schale (3), einer gleichförmigen Einlagefüllung (IR), hergestellt zum Formen von Schaumstoffen in der Schale (3);
wobei die operative Phase a) das Formen eines horizontalen, nach innen gerichteten Ansatzstückes (2) am oberen, umlaufenden Rand der Schale (3) vorsieht, **dadurch gekennzeichnet, dass** die Phase b) die Anordnung der Innenseite des Deckels der zweiten Form (10) im Wesentlichen bündig abschließend mit der oberen Fläche des umlaufenden Ansatzstückes (2) der Schale vorsieht, so dass die Höhe des für die Bildung der Einlagefüllung (IR) verwendeten Schaumstoffes die Höhe des Ansatzstückes (2) nicht überragt, so dass das horizontale Ansatzstück den Befestigungspunkt für den umlaufenden Rand des Schafts bilden kann.

2. Verfahren nach Anspruch 1, **dadurch gekennzeichnet, dass** die Phase b) vorsieht, dass der umlaufende Rand der oberen Fläche der Einlagefüllung (IR) der Schale (3) die untere Seite des umlaufenden Ansatzstückes (2) der Schale berührt, während die übrige obere Fläche der Einlage (IR) bündig mit dem Ansatzstück (2) abschließt.

3. Verfahren nach Anspruch 1 oder 2, **dadurch gekennzeichnet, dass** die Phase a) das Formen einer kleinen Stufe (14) außen auf dem umlaufenden Ansatzstück (2) vorsieht.

4. Verfahren nach einem beliebigen der Ansprüche von 1 bis 3, **dadurch gekennzeichnet, dass** die Phase a) das Formen von mehreren pilzförmigen Noppen (3a) auf der Innenseite der horizontalen Wand der Schale (3) vorsieht.

5. Verfahren nach einem beliebigen der Ansprüche von 1 bis 4, **dadurch gekennzeichnet, dass** die Phase a) das Formen von einer oder mehreren Querscheidewänden (1, 1 a) in vertikaler Stellung vorsieht, die dazu dienen, zwei oder mehrere gesonderte Vertiefungen (V1, V2) im Innern der Schale (3) zu bilden und die Phase b) das Formen der Einlagefüllung (IR) der Schale (3) in Form von zwei gesonderten Abschnitten (12, 13) vorsieht - wovon der eine der mittleren Scheidewand (1) der Schale vorgelagert, der andere nachgelagert ist - die aus verschiedenen Formstoffen mit unterschiedlicher Flexibilität hergestellt sind.

6. Verfahren nach Anspruch 1, **dadurch gekennzeichnet, dass** die Phase b) ausgeführt wird, nachdem auf den Innenwänden der Form (3) ein Film aus bekannten Stoffen aufgetragen wurde, die dazu dienen, eine stabile gegenseitige Verbindung mit der Einlagefüllung (IR) zu begünstigen.

7. Verfahren nach einem beliebigen der Ansprüche 1 bis 6, **dadurch gekennzeichnet, dass** die Form (10), die zur Formung der Einlagefüllung (IR) verwendet wird, aus Harz hergestellt ist und die Form aus Harz (10) zum Formen der Einlagefüllung (IR) hergestellt wird, indem als Schablone die Schale (3) verwendet wird, die dazu bestimmt ist, anschließend in das Innere derselben eingelegt zu werden.

## Revendications

1. Processus pour la réalisation d'une semelle de structure composite comprenant les phases opérationnelles suivantes:
a) moulage, dans un moule (16) doté de son couvercle (17), d'une coque (3) légère et flexible, réalisée en caoutchouc ou autres matériaux thermoplastiques et destinée à constituer la structure externe, entendue comme côtés du périmètre et surface inférieure de piétinement, d'une semelle pour chaussures;
b) insertion exacte de la dite coque (3) dans un second moule (10) aux fins du formage, dans la coque même (3), d'un insert de remplissage conforme (IR), réalisé moyennant moulage de matériaux expansés dans la coque (3) ; où la phase opérationnelle a) prévoit le moulage d'une bride horizontale (2) tournée vers l'interne, en correspondance du bord de périmètre supérieur de la coque (3),
**caractérisé en ce que** la phase b) prévoit la disposition de la face interne du couvercle du second moule (10) substantiellement au ras avec la surface supérieure de la bride de périmètre (2) de la coque, de manière que la hauteur du matériel expansé utilisé pour former l'insert de remplissage (IR) ne dépasse pas la hauteur de la bride (2), afin que la dite bride horizontale (2) puisse être le point de fixation du bord de périmètre de la tige.

2. Processus selon la revendication 1, **caractérisé en ce que** la dite phase b) prévoit que le bord de périmètre de la surface supérieure de l'insert de remplissage (IR) de la coque (3) touche la face inférieure de la bride de périmètre (2) de la coque, tandis que la surface supérieure restante de l'insert (IR) est au ras avec la bride (2).

3. Processus selon la revendication 1 ou 2, **caractérisé en ce que** la dite phase a) prévoit le formage d'un petit échelon (14), sur l'externe de la dite bride de périmètre (2).

4. Processus selon l'une quelconque des revendications de 1 à 3, **caractérisé en ce que** la dite phase a) prévoit le formage d'une pluralité de protubérances en forme de champignon (3a), en correspondance de la face interne de la paroi horizontale de la coque (3).

5. Processus selon l'une quelconque des revendications de 1 à 4, **caractérisé en ce que** la dite phase a) prévoit le formage d'une ou de plusieurs cloisons transversales (1, 1 a), disposées verticalement, aptes à donner lieu à deux ou plusieurs compartiments (V1, V2) à l'interne de la dite coque (3) et la phase b) prévoit le formage du dit insert de remplissage (IR) de la coque (3) sous forme de deux segments distincts (12, 13), dont l'un en amont et l'autre en aval de la dite cloison médiane (1) de la coque même, obtenus avec différents matériaux de moulage ayant des caractéristiques de flexibilité différentes.

6. Processus selon la revendication 1, **caractérisé en ce que** la dite phase b) est réalisée après avoir appliqué sur les parois internes du moule (3) un film de substances connues aptes à favoriser un couplage stable et mutuel avec l'insert de remplissage (IR).

7. Processus selon l'une quelconque des revendications de 1 à 6, **caractérisé en ce que** le dit moule (10) utilisé pour réaliser le formage du dit insert de remplissage (IR) est réalisé en résine et le dit moule en résine (10) pour le formage de l'insert de remplissage (IR) est réalisé en utilisant comme modèle la dite coque (3) destinée à être successivement insérée à son interne.
